# EUROPÄISCHE PATENTSCHRIFT

(11) **EP 1 314 095 B1**
(45) Veröffentlichungstag und Bekanntmachung des Hinweises auf die Patenterteilung: **29.12.2004**
(21) Anmeldenummer: 01964894.8
(22) Anmeldetag: 09.08.2001
(51) Int. Cl.: G06F 13/38, G06F 13/40

(54) **ERKENNUNG EINES GERÄTE-ANSCHLUSSZUSTANDS BEIM USB**
RECOGNITION OF THE CONNECTION STATE OF A DEVICE IN A USB
RECONNAISSANCE DE L'ETAT DE CONNEXION D'APPAREILS DANS UN USB

(30) Priorität: 30.08.2000 DE 10042633
(43) Veröffentlichungstag der Anmeldung: 28.05.2003
(73) Patentinhaber: Infineon Technologies AG, 81669 München (DE)
(72) Erfinder: BARRENSCHEEN, Jens, 81669 München (DE); SCHNEIDER, Peter, 80333 München (DE)
(74) Vertreter: Lange, Thomas, Dr.
(86) Internationale Anmeldenummer: PCT/DE2001/003072
(87) Internationale Veröffentlichungsnummer: WO 2002/019122

(56) Entgegenhaltungen:
- WO-A-00/34878
- WO-A-01/25943
- US-A- 5 612 634

## Beschreibung

Die Erfindung betrifft eine Schaltungsanordnung für ein Peripheriegerät eines USB, einen Integrierten Schaltkreis für ein USB-Peripheriegerät sowie ein Verfahren, mittels welchem in einem Integrierten Schaltkreis eines USB-Peripheriegeräts feststellbar ist, ob das Peripheriegerät an eine USB-Verbindung angeschlossen ist oder nicht.

Der Universal Serial Bus, im folgenden mit USB bezeichnet, ist ein serieller Bus, um verschiedene elektronische Geräte zu verbinden. Aufgrund seiner Vielseitigkeit wird der USB in den letzten Jahren zunehmend in Datenverarbeitungs- und Kommunikationssystemen eingesetzt.

Die Systemarchitektur des USB weist drei unterschiedliche Elemente auf, die als Host, Hub und Device bezeichnet werden. Der Host ist ein zentraler Rechner. Mit dem Begriff Hub werden die Verteilerknoten des USB bezeichnet. An den USB angeschlossene Peripheriegeräte wie z.B. Telefone, Computer-Mäuse, Tastaturen, Drucker, usw. werden als Devices bezeichnet.

In der deutschsprachigen Literatur werden die drei genannten Elemente des USB durchwegs mit ihren Anglizismen bezeichnet, eine allgemein gültige deutschsprachige Begriffsbildung besteht nicht. Im folgenden werden daher die Begriffe Host und Hub beibehalten und für das Element "Device" des USB der deutschsprachige Begriff "Peripheriegerät" verwendet.

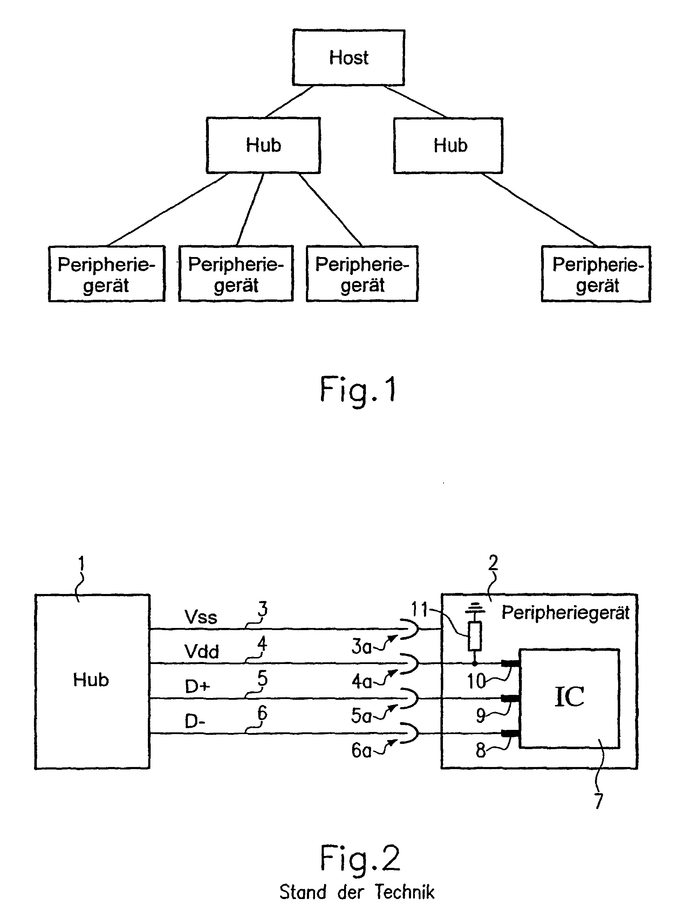

Ein Hub kann mit mehreren Peripheriegeräten in Verbindung stehen. In Fig. 2 ist eine Verbindung zwischen einem Hub 1 und einem Peripheriegerät 2 dargestellt. Laut der USB-Spezifikation umfaßt eine solche Verbindung genau vier Verbindungsleitungen. Zwei der vier Verbindungsleitungen, 3, 4, sind zur Stromversorgung des Peripheriegerätes 2 vorgesehen, müssen jedoch nicht verwendet werden, da das Peripheriegerät 2 auch eine eigene Stromversorgung aufweisen kann. Die Stromversorgungs-Verbindungsleitung 3 liegt auf Massepotential (Vss), die Stromversorgungs-Verbindungsleitung 4 liegt auf Betriebsspannungs-Potential (Vdd). Die beiden Datenleitungen 5, 6 sind mit D+ und D- bezeichnet und weisen im Betrieb Spannungswerte auf, welche sich auf das Massepotential Vss beziehen und den logischen Werten 0 und 1 zugeordnet sind.

Das Peripheriegerät 2 umfaßt einen Integrierten Schaltkreis 7 (Chip), welcher über einen ersten Pin 8 und einen zweiten Pin 9 mit den Datenleitungen 6 bzw. 5 in Verbindung gebracht werden kann. Der Integrierte Schaltkreis 7 enthält üblicherweise eine USB-Schnittstelle (nicht dargestellt), der die über die Pins 8 und 9 entgegengenommenen Datensignale zugeführt werden. Wegen des Bezugs der Spannungswerte der beiden Datenleitungen 5, 6 auf das Massepotential Vss wird dem Integrierten Schaltkreis IC in vielen Realisierungen in nicht dargestellter Weise (über einen nicht dargestellten Pin) auch das Massepotential Vss zugeführt.

Peripheriegeräte sind häufig nicht permanent mit einem Hub verbunden, sondern werden nur hin und wieder, bei Bedarf, an diesen angeschlossen. Zu diesem Zweck weist das USB-Peripheriegerät 2 Steckkontakte 3a, 4a, 5a, 6a auf, die den entprechenden Leitungen 3, 4, 5 und 6 zugeordnet sind. Zumindest dann, wenn der Integrierte Schaltkreis 7 die USB-Schnittstelle enthält, muß er in der Lage sein, erkennen zu können, ob das Peripheriegerät 2 über ein USB-Verbindungskabel oder ähnliches mit einem Hub 1 verbunden ist oder nicht.

Bei einer bekannten Lösung (siehe Fig. 2) wird die Stromversorgungs-Verbindungsleitung 4 zu diesem Zweck eingesetzt. Der Integrierte Schaltkreis 7 weist einen dritten Pin 10 auf, über den dem Integrierten Schaltkreis 7 signalisiert wird, ob eine Verbindung zu dem Hub 1 besteht oder nicht. Dieser Pin 10 wird daher auch als da- (device attatched-)Pin bezeichnet. Der dritte Pin 10 ist mit der Stromversorgungs-Verbindungsleitung 4 (Vdd) verbindbar und ein in dem Peripheriegerät 2 untergebrachter hochohmiger Widerstand 11 stellt eine Verbindung zwischen dem dritten Pin 10 und der Masse her.

Ist der Hub 1 nicht mit dem Peripheriegerät 2 verbunden, dann wird das am dritten Pin 10 anliegende elektrische Potential über den hochohmigen Widerstand 11 auf Masse, d.h. Vss, gezogen. Dies entspricht dem logischen Zustand 0. Im anderen Fall, d.h. sofern das Peripheriegerät 2 mit dem Hub 1 verbunden ist, liegt am dritten Pin 10 das Betriebsspannungs-Potential Vdd an, welches dem logischen Zustand 1 entspricht. Durch Messen der an dem dritten Pin 10 anliegenden Spannung kann der Integrierte Schaltkreis 7 demzufolge feststellen, ob eine Verbindung zwischen dem Peripheriegerät 2 und dem Hub 1 besteht oder nicht.

Nachteilig an der bekannten Lösung ist, daß der Integrierte Schaltkreis 7 eigens einen Pin 10 benötigt, um festzustellen, ob ein Hub 1 angeschlossen ist oder nicht. Pins kosten Geld und benötigen Platz, der z.B. bei tragbaren Geräten oder Geräten geringer Baugröße üblicherweise sehr knapp bemessen ist.

In der internationalen Veröffentlichung WO 00/34878 A1 ist ein USB-Peripheriegerät beschrieben, bei welchem zwischen eine der Datenleitungen und das Betriebsspannungs-Potential ein Widerstand und ein Schalter geschaltet sind. Sofern der Schalter den Widerstand mit dem Betriebsspannungs-Potential elektrisch verbindet, kann der zugehörige Hub feststellen, ob er mit dem Peripheriegerät verbunden ist. Der Schalter ist durch einen Feldeffekt-Transistor realisiert.

In der U.S.-Patentschrift US 5,612,634 A ist eine Steckverbindung zwischen einem Motherboard und einer Einsteckkarte beschrieben. Die Einsteckkarte umfasst eine Schaltungsanordnung, mit welcher sich aufgrund einer Potentialmessung feststellen lässt, ob eine elektrische Verbindung zwischen dem Motherboard und der Einsteckkarte besteht.

Der Erfindung liegt die Aufgabe zugrunde, einen kostengünstigen Integrierten Schaltkreis zu schaffen, welcher in der Lage ist, den Anschlußzustand des USB-Peripheriegerätes zu erkennen. Es soll ferner eine Schaltungsanordnung für ein USB-Peripheriegerät angegeben werden, welche eine kostengünstige Ausführung des in dem USB-Peripheriegerät enthaltenen Integrierten Schaltkreis ermöglicht. Darüber hinaus zielt die Erfindung darauf ab, ein einfaches und einen geringen Hardware-Aufwand voraussetzendes Verfahren zu diesem Zweck anzugeben.

Die der Erfindung zugrundeliegende Aufgabenstellung wird durch die Merkmale der unabhängigen Ansprüche 1 und 10 gelöst.

Ein wesentlicher Gesichtspunkt der Erfindung besteht darin, daß zum Erkennen des Anschlußzustandes ein Pin des Integrierten Schaltkreises verwendet wird, der für die Datenübertragung vorgesehen ist.

Es wird dabei gerade der Pin eingesetzt, der nicht mit dem gemäß der USB-Spezifikation zwingend vorhandenen Peripheriegerät-Funktionsinformationswiderstand verbunden ist. Dieser Pin wird gemäß der Erfindung - zumindest dann, wenn eine Überprüfung des Anschluß-Zustandes des USB-Peripheriegerätes erfolgen soll - über ein elektrisch leitfähiges Bauelement mit der Betriebsspannung verbunden. Das Bauelement bewirkt, daß das an diesem (anderen) Pin auftretende elektrische Potential abhängig davon ist, ob eine USB-Verbindung zu dem USB-Peripheriegerät besteht oder nicht. (Besteht keine Verbindung, liegt dieser Pin wegen dem elektrisch leitfähigen Bauelement auf Betriebsspannungspotential. Besteht eine Verbindung, so stellt sich ein Potential entsprechend des durch den Hub vorgegebenen Abschlußwiderstands und dem Widerstand des elektrisch leitfähigen Bauelements ein.), Dies wiederum versetzt den Integrierten Schaltkreis in die Lage, den USB-Anschlußzustand (Vorhandensein oder Nichtvorhandensein einer Verbindung) anhand des an diesem anderen Pin auftretenden Potentials zu erkennen. Die Erfindung weist somit den Vorteil auf, daß ein gesonderter Pin zur Erkennung des Anschlußzustandes am Integrierten Schaltkreis entfallen kann.

Es wird darauf hingewiesen, daß für eine korrekte Auswertung des Anschlußzustands im Integrierten Schaltkreis nicht bekannt sein muß, welcher der beiden Pins mit dem Peripheriegerät-Funktionswiderstand und welcher mit dem elektrisch leitfähigen Bauelement verbunden ist. Denn sofern das USB-Peripheriegerät nicht an den Hub angeschlossen ist, liegen beide Pins notwendigerweise auf Betriebsspannungspotential, während im anderen Fall zumindest einer der Pins (nämlich jener, der mit dem elektrisch leitfähigen Bauelement verbunden ist) ein anderes Potential aufweist. Vorzugsweise wird die Auswertung also in der Form durchgeführt, daß das Auswertemittel überprüft, ob beide Pins Betriebsspannungspotential aufweisen oder nicht.

Bei dem elektrisch leitfähigen Bauelement kann es sich nach einer vorteilhaften Ausgestaltung der Erfindung um einen ohmschen Widerstand oder um einen Transistor handeln.

Sofern das elektrisch leitfähige Bauelement permanent mit dem zweiten Pin verbunden ist, ist es bevorzugt, daß es einen elektrischen Widerstand aufweist, der gleich oder größer als 100 kΩ ist. Je größer der elektrische Widerstand, desto geringer ist die in dem Bauelement umgesetzte Verlustleistung.

Eine weitere vorteilhafte Ausgestaltung der Erfindung betrifft den Fall, daß die Schaltungsanordnung ein Wechselschaltermittel umfaßt, mittels welchem der Peripheriegerät-Funktionsinformationswiderstand von dem einen Pin getrennt und dabei an den anderen Pin angeschlossen wird. Ein solches Wechselschaltermittel kann beispielsweise dann in dem USB-Peripheriegerät enthalten sein, wenn dieses ein Mehrfunktionsgerät ist bzw. in unterschiedlichen Betriebsarten arbeiten kann. In diesem Fall kennzeichnet sich eine vorteilhafte Weiterbildung der Erfindung dadurch, daß auch der eine, ursprünglich mit dem Funktionsinformationswiderstand verbundene, Pin über ein elektrisch leitfähiges Bauelement mit der in Anspruch 1 genannten Wirkung mit der Betriebsspannung verbindbar ist. Dadurch wird erreicht, daß im Falle einer erforderlich werdenden Umschaltung des Peripheriegerät-Funktionsinformationswiderstands die erfindungsgemäße Möglichkeit der Erkennung des Anschlußzustands nicht verloren geht, sondern nun über den ersten Pin abgewickelt wird.

Das elektrisch leitfähige Bauelement kann grundsätzlich sowohl im Integrierten Schaltkreis als auch in Form einer äußeren Beschaltung des Integrierten Schaltkreises realisiert sein. Insbesondere dann, wenn der Peripheriegerät-Funktionsinformationswiderstand in dem Integrierten Schaltkreis realisiert ist, ist vorzugsweise auch das elektrisch leitfähige Bauelement integraler Bestandteil des Integrierten Schaltkreises.

Bei dem erfindungsgemäßen Verfahren wird durch Auswerten des am zweiten Pin auftretenden Potentials im Integrierten Schaltkreis der USB-Anschlußzustand ermittelt. Dies ermöglicht, wie bereits beschrieben, die Einsparung des im Stand der Technik verwendeten da-Pins.

Die Erfindung wird nachfolgend anhand eines Ausführungsbeispiels unter Bezugnahme auf die Zeichnung erläutert; in dieser zeigt:
- Fig. 1: eine schematische Darstellung der USB-Systemarchitektur;
- Fig. 2: eine schematische Darstellung einer Schaltungsanordnung zum Erkennen eines Peripheriegerät-Anschlußzustandes nach dem Stand der Technik;
- Fig. 3: eine schematische Darstellung der gemäß USB-Spezifikation geforderten Beschaltung der beiden Datenleitungen; und
- Fig. 4: eine schematische Darstellung einer Schaltungsanordnung nach der Erfindung.

Fig. 1 zeigt die Systemarchitektur des USB. Die zentrale Einheit des USB ist der Host, realisiert durch einen Rechner. An den Rechner sind ein oder mehrere Hubs (Verteilerknoten) angeschlossen. Jeder Hub weist einen sogenannten Upstream-Port in Richtung Host (oder in Richtung eines der nächsthöheren Hubs) und mehrere Downstream-Ports auf. An die Downstream-Ports können USB-Peripheriegeräte oder nächstniedrigere Hubs angeschlossen werden.

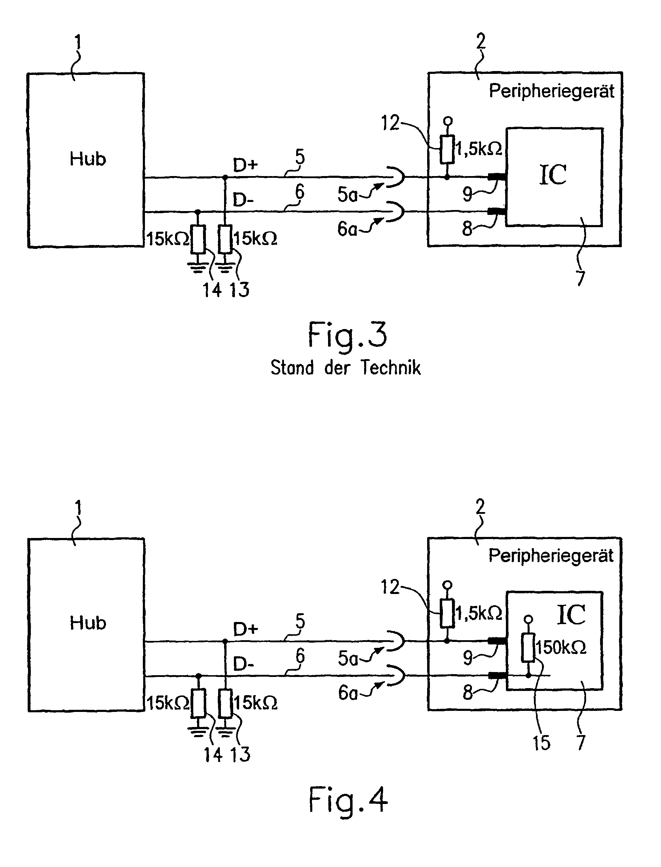

Fig. 3 zeigt einen Hub 1, welcher über eine USB-Verbindung an ein Peripheriegerät 2 angeschlossen ist. Für dieselben oder gleichwirkende Teile wie in Fig. 2 werden die gleichen Bezugszeichen verwendet. In Fig. 3 sind lediglich die Datenleitungen 5, 6 (d.h. D+, D-) dargestellt. Laut USB-Spezifikation ist folgende Beschaltung der Datenleitungen 5, 6 vorgeschrieben:

Auf Seiten des Hubs 1 ist jede der Datenleitungen 5, 6 über einen 15 kΩ-Widerstand 13, 14 gegen Masse zu legen; auf Seiten des Peripheriegeräts 2 ist einer der Pins 8, 9 (hier: Pin 9) mit einem 1,5 kΩ-Widerstand 12 an die Betriebsspannung (üblicherweise +3,3V) anzuschließen.

Der 1,5 kΩ-Widerstand 12 wird als Peripheriegerät-Funktionsinformationswiderstand bezeichnet. Laut USB-Spezifikation ist zwingend vorgeschrieben, daß dieser Widerstand 12 an einem der beiden Pins 8, 9 angeschlossen ist. Durch diesen Widerstand wird dem Hub 1 signalisiert, daß ein USB-Peripheriegerät 2 angeschlossen ist, und je nachdem, ob der Widerstand 12 an Pin 8 oder an Pin 9 angeschlossen ist, werden bestimmte Fähigkeiten des USB-Peripheriegerätes 2 für den Hub 1 erkennbar.

Eine erfindungsgemäße Schaltungsanordnung ist in Fig. 4 dargestellt. Wiederum sind lediglich die Datenleitungen 5, 6 dargestellt und es sind gleiche oder funktionsähnliche Bauelemente mit den gleichen Bezugszeichen wie in den Fig. 2 und 3 bezeichnet.

Bei dem in Fig. 4 dargestellten Beispiel liegt der 1,5 kΩ Peripheriegerät-Funktionsinformationswiderstand 12 an dem Pin 9 des Integrierten Schaltkreises 7 an. Das elektrisch leitfähige Bauelement, hier realisiert durch einen 150 kΩ Widerstand 15, ist in dem Integrierten Schaltkreis 7 realisiert und verbindet den Pin 8 permanent mit der Betriebsspannung. Der restliche Schaltungsaufbau entspricht der Darstellung in Fig. 3.

Die Wirkungsweise des Widerstands 15 ist wie folgt:

Ist das Peripheriegerät 2 getrennt von dem Hub 1 (d.h. die Steckkontakte 5a und 6a sind offen) bewirkt der Widerstand 15, daß der Pin 8 auf das Betriebsspannungs-Potential "hochgezogen" wird. Im anderen Fall, d.h. bei geschlossenen Steckkontakten 5a und 6a, wird der Pin 8 über die Datenleitung 6 und über den 15 kΩ Widerstand 14 mit Masse (Vss) verbunden. Damit wird das elektrische Potential an dem Pin 8 nahezu auf Massepotential "heruntergezogen", da der hauptsächliche Spannungsabf all nunmehr an dem verglichen mit dem Widerstand 14 wesentlich größeren Widerstand 15 auftritt.

Durch Auswerten des am Pin 8 auftretenden Potentials kann im Integrierten Schaltkreis 7 der USB-Anschlußzustand ermittelt werden. Die Auswertung kann beispielsweise bei der Initialisierung des Peripheriegeräts 2 oder zu einem anderen geeigneten Zeitpunkt erfolgen und wird durch Aufruf und Abarbeitung einer im Integrierten Schaltkreis 7 gespeicherten Auswerteroutine unterstützt.

Es sind verschiedene Modifikationen der in Fig. 4 dargestellten Schaltungsanordnung möglich.

Bei der in Fig. 4 dargestellten Anordnung ist der 150 kΩ-Widerstand 15 permanent mit dem Pin 8 und der Betriebsspannung verbunden. Eine andere Möglichkeit besteht darin, daß dieser Widerstand 15 lediglich temporär an den Pin 8 angelegt wird, und zwar immer nur dann, wenn eine Überprüfung des Anschlußzustands im Integrierten Schaltkreis 7 durchgeführt werden soll. In diesem Fall kann der Widerstand 15 auch kleinere Werte aufweisen (bei einem Wert von 15 kΩ würde das Potential der Datenleitung 6 bei bestehender Verbindung gerade auf das halbe Betriebsspannungs-Niveau abgesenkt werden).

Das Zuschalten des Widerstands 15 kann über einen Schalttransistor erfolgen oder der widerstand 15 kann selber als Emitter-Kollektor-Pfad z.B. in einem schwach leitenden p-Transistor ausgebildet sein.

Sowohl der Funktionsinformations-Widerstand 12 als auch das elektrisch leitfähige Bauelement 15 können als interne Schaltungsbestandteile des Integrierten Schaltkreises 7, als äußere Beschaltung des Integrierten Schaltkreises 7 oder, wie in Fig. 4 dargestellt, in gemischter Form vorliegen.

Sofern das Peripheriegerät 2 bzw. der Integrierte Schaltkreis 7 ein die Funktion eines Wechselschalters aufweisendes Bauelement aufweisen, mittels welchem der 1,5 kΩ Funktionsinformationswiderstand 12 zu verschiedenen Zeitpunkten entweder an Pin 9 oder an Pin 8 angeschlossen werden kann, kann auch an dem Pin 9 ein Widerstand entsprechend dem Widerstand 15 anliegen. Dieser Widerstand kann ebenfalls entweder permanent verbunden, zuschaltbar und/oder in Form eines Transistors realisiert sein. Wie bereits erwähnt, muß dem Integrierten Schaltkreis 7 die konkrete Konfiguration der Widerstandsbeschaltung mit den Widerständen 12, 15 nicht bekannt sein, da er durch eine Auswertung beider Pin-Potentiale in jedem Fall den Anschlußzustand ermitteln kann.

Die USB-Verbindung 3, 4, 5, 6 kann als 4-adriges Verbindungskabel oder auch auf andere Weise, z.B. über eine Funkstrecke, realisiert sein. Im letzteren Fall weist das Peripheriegerät 2 in nicht dargestellter Weise weitere Einrichtungen wie eine Antenne, einen Modulator und einen Demodulator usw. auf.

## Patentansprüche

1. Integrierter Schaltkreis für ein USB-Peripheriegerät, mit
- zwei Pins (8, 9) zum Anschluß an die beiden Datenübertragungsleitungen (5, 6) einer USB-Verbindung, wobei
- einer der Pins (9) dafür vorgesehen ist, über den gemäß USB zwingend vorgeschriebenen Peripheriegerät-Funktionsinformationswiderstand (12) mit einer Betriebsspannung verbunden zu werden, und
- der Integrierte Schaltkreis (7) ein Auswertemittel umfaßt, welches ausgelegt ist, in Abhängigkeit von dem am anderen Pin (8) auftretenden Potential den USB-Anschlußzustand zu erkennen.

2. Integrierter Schaltkreis nach Anspruch 1,
**dadurch gekennzeichnet,**
- **daß** das Auswertemittel überprüft, ob beide Pins (8, 9) Betriebsspannungspotential aufweisen oder nicht.

3. Schaltungsanordnung für ein USB-Peripheriegerät,
- mit einem Integrierten Schaltkreis (7) nach Anspruch 1 oder 2, und
- mit einem gemäß USB zwingend vorgeschriebenen Peripheriegerät-Funktionsinformationswiderstand (12), über den einer dieser Pins (9) mit einer Betriebsspannung verbunden ist, wobei
- der andere Pin (8) über ein elektrisch leitfähiges Bauelement (15) mit der Betriebsspannung verbindbar ist, welches, sobald mit dem anderen Pin (8) verbunden, bewirkt, daß das am anderen Pin (8) auftretende elektrische Potential abhängig davon ist, ob eine USB-Verbindung zu dem USB-Peripheriegerät (2) besteht oder nicht.

4. Schaltungsanordnung nach Anspruch 3,
**dadurch gekennzeichnet,**
- **daß** das elektrisch leitfähige Bauelement ein ohmscher Widerstand (15) ist.

5. Schaltungsanordnung nach Anspruch 3,
**dadurch gekennzeichnet,**
- **daß** das elektrisch leitfähige Bauelement ein Transistor ist.

6. Schaltungsanordnung nach einem der Ansprüche 3 bis 5,
**dadurch gekennzeichnet,**
- **daß** das elektrisch leitfähige Bauelement permanent mit dem anderen Pin (8) verbunden ist, und
- **daß** es einen elektrischen Widerstand aufweist, der gleich oder größer als 100 kΩ ist.

7. Schaltungsanordnung nach einem der Ansprüche 3 bis 6,
**dadurch gekennzeichnet,**
- **daß** die Schaltungsanordnung ein Wechselschaltermittel umfaßt, mittels welchem der Peripheriegerät-Fünktionsinformationswiderstand (12) von dem einen Pin (9) trennbar und dabei an den anderen Pin (8) anschließbar ist, und
- **daß** der eine Pin (9) ebenfalls über ein elektrisch leitfähiges Bauelement mit der Betriebsspannung verbindbar ist.

8. Schaltungsanordnung nach einem der Ansprüche 3 bis 7,
**dadurch gekennzeichnet,**
- **daß** das elektrisch leitfähige Bauelement (15) im Integrierten Schaltkreis (7) ausgebildet ist.

9. Schaltungsanordnung nach einem der Ansprüche 3 bis 7,
**dadurch gekennzeichnet,**
- **daß** das elektrisch leitfähige Bauelement (15) außerhalb des Integrierten Schaltkreises (7) ausgebildet ist.

10. Verfahren, mittels welchem in einem Integrierten Schaltkreis eines USB-Peripheriegeräts festgestellt werden kann, ob das Peripheriegerät (2) an eine USB-Verbindung angeschlossen ist oder nicht, wobei
- der Integrierte Schaltkreis (7) zwei Pins (8, 9) zum Anschluß an die beiden Datenübertragungsleitungen (5, 6) einer USB-Verbindung aufweist,
- einer dieser Pins (9) über den gemäß USB zwingend vorgeschriebenen Peripheriegerät-Funktionsinformationswiderstand (12) mit einer Betriebsspannung verbunden ist, und
- der andere Pin (8) über ein elektrisch leitfähiges Bauelement (15) entweder permanent mit der Betriebsspannung verbunden ist oder zeitweise mit der Betriebsspannung verbunden wird, und das elektrisch leitfähige Bauelement (15), sobald mit dem anderen Pin (8) verbunden, bewirkt, daß das am anderen Pin (8) auftretende elektrische Potential abhängig davon ist, ob eine USB-Verbindung zu dem USB-Peripheriegerät (2) besteht oder nicht, und wobei das Verfahren den Schritt aufweist:
- Auswerten des am anderen Pin (8) auftretenden Potentials im Integrierten Schaltkreis (7) zum Erkennen des USB-Anschlußzustands.

11. Verfahren nach Anspruch 10,
**dadurch gekennzeichnet,**
- **daß** beim Auswerteschritt das an beiden Pins (8, 9) anliegende Potential überprüft wird.

12. Verfahren nach Anspruch 10 oder 11,
**dadurch gekennzeichnet,**
- **daß** nach dem Auswerteschritt die das elektrisch leitfähige Bauelement (15) enthaltende Verbindung zwischen dem anderen Pin (8) und der Betriebsspannung getrennt wird.

## Claims

1. Integrated circuit for a USB peripheral, having
- two pins (8, 9) for connection to the two data transmission lines (5, 6) of a USB connection, wherein
- one of the pins (9) is intended to be connected to an operating voltage via the peripheral functional information resistor (12) which is specified as being essential in accordance with USB, and
- the integrated circuit (7) has evaluation means which are designed to identify the USB connection state as a function of the potential which is present on the other pin (8).

2. Integrated circuit according to Claim 1,
**characterized**
- **in that** the evaluation means check whether both pins (8, 9) are or are not at the operating voltage potential.

3. Circuit arrangement for a USB peripheral,
- having an integrated circuit (7) according to Claim 1 or 2, and
- having a peripheral functional information resistor (12), which is specified as being essential for USB, via which one of these pins (9) is connected to an operating voltage,
wherein
- the other pin (8) can be connected to the operating voltage via an electrically conductive component (15) which, as soon as it is connected to the other pin (8), results in the electrical potential which is applied to the other pin (8) being dependent on whether or not there is a USB connection to the USB peripheral (2).

4. Circuit arrangement according to Claim 3,
**characterized**
- **in that** the electrically conductive component is a nonreactive resistor (15).

5. Circuit arrangement according to Claim 3,
**characterized**
- **in that** the electrically conductive component is a transistor.

6. Circuit arrangement according to one of Claims 3 to 5,
**characterized**
- **in that** the electrically conductive component is permanently connected to the other pin (8), and
- **in that** it has an electrical resistance which is greater than or equal to 100 kΩ.

7. Circuit arrangement according to one of Claims 3 to 6,
**characterized**
- **in that** the circuit arrangement has a changeover switch means, using which the peripheral functional information resistor (12) can be disconnected from the one pin (9) and can in this case be connected to the other pin (8), and
- **in that** one pin (9) can likewise be connected to the operating voltage via an electrically conductive component.

8. Circuit arrangement according to one of Claims 3 to 7,
**characterized**
- **in that** the electrically conductive component (15) is formed in the integrated circuit (7).

9. Circuit arrangement according to one of Claims 3 to 7,
**characterized**
- **in that** the electrically conductive component (15) is formed outside the integrated circuit (7).

10. Method by means of which it is possible to determine in an integrated circuit in a USB peripheral whether that peripheral (2) is or is not connected to a USB connection,
wherein
- the integrated circuit (7) has two pins (8, 9) for connection to the two data transmission lines (5, 6) of a USB connection,
- one of these pins (9) is connected to an operating voltage via the peripheral functional information resistor (12) which is specified as being essential in accordance with USB, and
- the other pin (8) is either permanently connected to the operating voltage or is connected to the operating voltage at times via an electrically conductive component (15), and, as soon as it is connected to the other pin (8), the electrically conductive component (15) results in the electrical potential which is present on the other pin (8) being dependent on whether or not there is a USB connection to the USB peripheral (2), and wherein the method has the following step:
- evaluation of the potential which is present on the other pin (8) in the integrated circuit (7) in order to identify the USB connection state.

11. Method according to Claim 10,
**characterized**
- **in that** the potential which is present on both pins (8, 9) is checked during the evaluation step.

12. Method according to Claim 10 or 11,
**characterized**
- **in that**, after the evaluation step, the connection which contains the electrically conductive component (15) between the other pin (8) and the operating voltage is disconnected.

## Revendications

1. Circuit intégré pour un appareil périphérique USB, comprenant :
- deux broches (8, 9) de connexion aux deux lignes (5, 6) de transmission de données d'une liaison USB, dans lequel
- l'une des broches (9) est destinée à être reliée à une tension de fonctionnement par l'intermédiaire de la résistance (12) d'information de fonction de l'appareil périphérique prescrite obligatoirement suivant USB, et
- le circuit (7) intégré comprend un moyen d'évaluation conçu pour reconnaître l'état de connexion USB en fonction du potentiel se produisant sur l'autre broche (8).

2. Circuit intégré suivant la revendication 1, **caractérisé**
- **en ce que** le moyen d'évaluation contrôle si les deux broches (8, 9) ont le potentiel de la tension de fonctionnement ou ne l'ont pas.

3. Montage pour un appareil périphérique USB
- comprenant un circuit (7) intégré suivant la revendication 1 ou 2, et
- comprenant une résistance (12) d'information de fonction de l'appareil périphérique prescrite obligatoirement suivant l'USB, par laquelle l'une de ces broches (9) est reliée à une tension de fonctionnement, dans lequel
- l'autre broche (8) peut être reliée à la tension de fonctionnement par un composant (15) conducteur de l'électricité qui fait que, dès la liaison avec l'autre broche (8), le potentiel électrique se produisant sur l'autre broche (8) dépend du point de savoir s'il y a une liaison USB avec l'appareil (2) périphérique USB ou non.

4. Montage suivant la revendication 3, **caractérisé**
- **en ce que** le composant conducteur de l'électricité est une résistance (15) ohmique.

5. Montage suivant la revendication 3, **caractérisé**
- **en ce que** le composant conducteur de l'électricité est un transistor.

6. Montage suivant l'une des revendications 3 à 5, **caractérisé**
- **en ce que** le composant conducteur de l'électricité est relié de manière permanent à l'autre broche (8), et
- **en ce qu'**il comporte une résistance électrique qui est supérieure ou égale à 100 kΩ.

7. Montage suivant l'une des revendications 3 à 6, **caractérisé**
- **en ce que** le montage comprend un moyen à commutateur inverseur, au moyen duquel la résistance (12) d'information de fonction de l'appareil périphérique peut être séparée de l'une des broches (9) et être raccordée à l'autre broche (8), et
- **en ce que** l'une des broches (9) peut être reliée à la tension de fonctionnement également par un composant conducteur de l'électricité.

8. Montage suivant l'une des revendications 3 à 7, **caractérisé**
- **en ce que** le composant (15) conducteur de l'électricité est constitué dans le circuit (7) intégré.

9. Montage suivant l'une des revendications 3 à 7, **caractérisé**
- **en ce que** le composant (15) conducteur de l'électricité est constitué à l'extérieur du circuit (7) intégré.

10. Procédé au moyen duquel on peut constater, dans un circuit intégré d'un appareil périphérique USB, si l'appareil (2) périphérique est raccordé à une liaison USB ou ne l'est, dans lequel
- le circuit (7) intégré a deux broches (8, 9) de connexion aux deux lignes (5, 6) de transmission de données d'une liaison USB,
- l'une de ces broches (9) est reliée à une tension de fonctionnement par la résistance 12 d'information de fonction de l'appareil périphérique prescrite obligatoirement suivant l'USB, et
- l'autre broche (8) est reliée à la tension de fonctionnement par un composant (15) conducteur de l'électricité en permanence ou de temps en temps et le composant (15) conducteur de l'électricité fait que, dès la liaison avec l'autre broche (8), le potentiel électrique se produisant sur l'autre broche (8) dépend du point de savoir s'il y a une liaison USB allant à l'appareil (2) périphérique USB ou non et le procédé comprend le stade :
- d'exploitation du potentiel se produisant sur l'autre broche (8) dans le circuit (7) intégré pour reconnaître l'état de connexion USB.

11. Procédé suivant la revendication 10, **caractérisé**
- **en ce que**, dans le stade d'exploitation, on contrôle le potentiel s'appliquant aux deux broches (8, 9).

12. Procédé suivant la revendication 10 ou 11, **caractérisé**
- **en ce qu'**après le stade d'exploitation, on sépare la liaison comportant le composant (15) conducteur de l'électricité entre l'autre broche (8) et la tension de fonctionnement.
